# EUROPEAN PATENT APPLICATION

(11) **EP 3 546 115 A1**
(43) Date of publication of application: **02.10.2019**
(21) Application number: 19161498.1
(22) Date of filing: 08.03.2019
(51) Int. Cl.: B23P 19/02, F01D 5/30, F01D 25/28

(54) **BLADE REMOVAL METHOD AND APPARATUS**

(30) Priority: 26.03.2018 GB 201804798
(71) Applicant: Rolls-Royce plc, London SW1E 6AT (GB)
(72) Inventor: Benson, Christopher, Derby, Derbyshire DE24 8BJ (GB)
(74) Representative: Rolls-Royce plc

(57) **Abstract**

The blade (30) of a fan (13) of a gas turbine engine situated within an intake duct (12) is removed using apparatus comprising a support structure (40) supporting a cantilevered platform (42) for an operator (36) and a guide rail (44) which is profiled to receive a blade root (48) of the blade (30). The operator (36) releases the blade (30) and slides it from its recess in the fan disc (32) into a complementary guide channel (62) in the guide rail (44). The guide rail (44) follows a path which constrains the blade (30) to move in a direction, and at an orientation, which avoids interference with the intake duct (12).

## Description

The present disclosure concerns the removal of blades from a gas turbine engine and is particularly, although not exclusively, concerned with the removal of fan blades from a fan system of a gas turbine engine.

The propulsive fan of a typical gas turbine engine comprises an array of fan blades mounted on a central rotating disc. From time to time it is necessary to remove individual fan blades for repair or replacement. This can be done when the engine is removed from an aircraft and partially dismantled for overhaul, but it is sometimes convenient to remove one or more fan blades from the fan while the engine remains in place on an aircraft wing.

Fan blades of propulsive fans can be of significant size and weight, and the air intake duct forward of the fan (i.e. upstream of the fan in the normal direction of airflow through the engine) can make it difficult to remove a fan blade manually and extract it from the engine intake duct without damaging the blade or the intake duct. Engines with long intake ducts may need tread boards or other protective measures to avoid damage to the intake duct by operators standing within them to access the fan blades. Engines with shorter intake ducts may not have enough axial room for an operator to stand safely in the intake duct. In addition to this the short intake duct brings the throat (minimum diameter point) of the intake duct back towards the fan, making blade removal problematic.

According to a first aspect there is provided a method of withdrawing a blade from a gas turbine engine, the method comprising:
i. positioning a receiving end of an elongate guide adjacent a blade root of the blade;
ii. releasing the blade from the gas turbine engine;
iii. supporting the blade by the blade root on the elongate guide at the receiving end; and
iv. conveying the blade along the elongate guide away from the gas turbine engine

The gas turbine engine may be mounted on a wing of an aircraft. The receiving end of the elongate guide may be positioned within an intake duct of the gas turbine engine. The blade may be conveyed along the elongate guide at least partly under gravity. Alternatively, or in addition, the blade may be conveyed along the elongate guide at least partly under power.

The blade may be removed from the elongate guide at an exit point at the end of the guide opposite the receiving end.

The blade may be conveyed along the elongate guide from a first level corresponding to the blade position in the engine to a second level which is lower than the first level.

According to a second aspect there is provided apparatus for use in performing a method in accordance with the first aspect, the apparatus comprising:
i. a support structure for supporting the apparatus on a ground surface;
ii. the elongate guide supported on the support structure and having the receiving end; and
iii. an elevated operator platform for supporting an operator when releasing the blade from the gas turbine engine and transferring the blade to the elongate guide at the receiving end.

The elongate guide and the platform may be cantilevered from the support structure whereby the receiving end and at least part of the platform are positionable within an intake duct of a gas turbine engine.

The elongate guide may have an internal guide channel for receiving the blade root and a longitudinally extending blade projection slot extending from the guide channel to the exterior of the elongate guide, the blade projection slot having a width less than the maximum transverse width of the guide channel.

The guide channel may be provided with a bearing arrangement adjacent to the blade projection slot.

At least a portion of the elongate guide may be twisted about its longitudinal axis, whereby orientation of the blade about the longitudinal axis of the elongate guide changes during travel of the blade along the elongate guide.

A carrier may be provided at an exit end of the elongate guide which carrier is positionable for receiving a blade from the elongate guide.

A runner may be mounted for travel along the elongate guide, the runner carrying a blade holder configured to receive the blade root of the blade from the gas turbine engine at the receiving end of the elongate guide.

Drive means may be provided for conveying the blade along the elongate guide.

A blade attachment may be provided which is configured for connection to the blade and is engageable with the drive means.

At least a portion of the elongate guide may be inclined to another section of the elongate guide.

The elongate guide may terminate at the end away from the receiving end at a position close to the ground surface.

A retardation device may be provided for retarding blade travel on the downward sloping portion of the elongate guide.

The apparatus may be employed in conjunction with an elevated gas turbine engine, the receiving end of the elongate guide being positioned adjacent a blade of the engine.

The blade may be situated within an intake duct of the engine, the intake duct having an inner wall, and the elongate guide may be so shaped to maintain a minimum distance from the inner wall of the intake duct that allows the blade not to interfere with the intake duct during withdrawing. In other words, the elongate guide may be so shaped to maintain a minimum distance from an inner wall of an intake duct of a gas turbine engine that may allow the blade situated within the intake duct not to interfere with the intake duct during withdrawing. In other words,

The blade may comprise an aerofoil portion and be situated within an intake duct of the engine, the intake duct having an inner wall, and the portion of the elongate guide which is situated within the intake duct may be spaced from the inner wall by at least the spanwise dimension of the aerofoil portion of the blade. In other words, a portion of the elongate guide which may be situated within the intake duct may be spaced from the inner wall by at least the spanwise dimension of an aerofoil portion of the blade.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
Figure 1 is a sectional side view of a gas turbine engine;
Figure 2 is a schematic view of an engine intake duct and apparatus for use in removing a fan blade;
Figure 3 is a fragmentary enlarged view of part of the apparatus shown in Figure 2;
Figure 4 shows an alternative embodiment of the apparatus;
Figure 5 is a partial view of a third embodiment of the apparatus;
Figure 6 corresponds to Figure 5 but shows a fourth embodiment of the apparatus;
Figure 7 is an enlarged fragmentary view of the apparatus of Figure 6;
Figure 8 shows a fifth embodiment of the apparatus;
Figures 9A, 9B and 9C show a variant of the apparatus of Figure 3; and
Figure 10 is a schematic flow chart of the blade removal process.

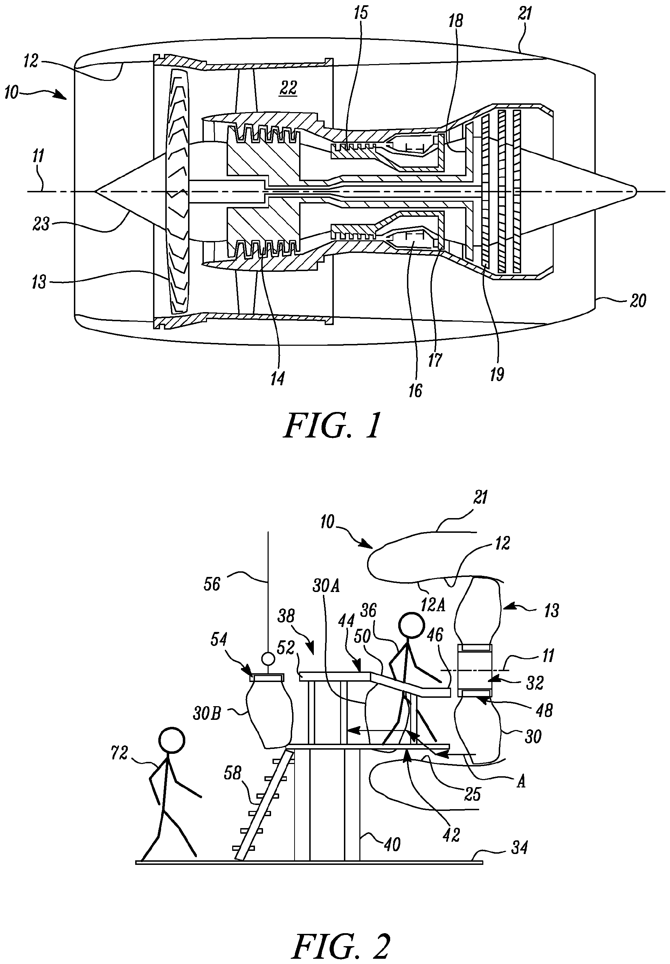

With reference to Figure 1, a gas turbine engine is generally indicated at 10, having a principal and rotational axis 11. The engine 10 comprises, in axial flow series, an intake duct defining an air intake 12, a propulsive fan 13 comprising an array of fan blades 30 mounted on a disc 32 (see Figure 2), an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20. A spinner 23 is fitted to, and rotates with, the fan 13.

The gas turbine engine 10 works in the conventional manner so that air entering the intake 12 is accelerated by the fan 13 to produce two air flows: a first airflow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

Figure 2 shows the forward end of an engine mounted on the wing of an aircraft (not shown) standing on a ground surface 34. Alternatively, the engine may be supported above ground level on a stand, for example in a workshop. It will be appreciated that the engine, and in particular the air intake 12, is situated at some distance above the ground surface 34 and that the fan 13 is set back from the forward end of the air intake 12. As a result, access to the fan 13 by personnel standing on the ground surface 34 is difficult. The engine may have a short air intake 12, by which is meant an air intake which has an L/D ratio of not more than 0.5, and may typically be less than 0.4 or 0.3, where L is the length of the air intake from the front face of the fan 13 to the forward extremity of the air intake 12, and D is the diameter of the fan 13. As a consequence of the relatively low L/D ratio, the throat 12A of the air intake 12 is closer to the fan 13 than the corresponding throat in an engine having a longer air intake, with an L/D ratio greater than 0.5.

In some circumstances, it is necessary to remove individual fan blades 30 from the engine for the purposes of inspection, repair or replacement. Figure 2 shows apparatus 38 for assisting in such removal. The apparatus comprises a support structure 40 in the form of upright columns which stand on the ground surface 34. The support structure 40 supports a platform 42 for an operator 36, and an elongate guide in the form of a guide rail 44. The platform 42 and the guide rail 44 are cantilevered from the support structure 40 so that, as shown in Figure 2, they can extend into the air intake 12 so that the end of the guide rail 44, which can be regarded as a receiving end 46, is positioned close to the root 48 of one of the blades 30. In the embodiment shown in Figure 2, the blade in question is the lowermost blade of the fan 13, i.e. the blade at the 6 o'clock position, or bottom dead centre (BDC).

From the receiving end 46, the guide rail 44 extends away from the fan 13 over a section 50 which is inclined with respect to the section adjacent the receiving end 46. In the embodiment shown in Figure 2, the section 50 is inclined upwardly in the direction towards an exit end 52 disposed outside the air intake 12. The guide rail 44 is shaped to maintain a minimum distance from an inner wall 25 of the intake duct 12. The minimum distance may be at least a spanwise length of the aerofoil 60, to allow the blade 30 not to interfere with the intake duct 12 during removal. In other words, the minimum distance may allow the blade 30, when retained in the channel 62, to be transported away from the disc 32 without contacting the intake duct 12. In the condition shown in Figure 2, a carrier 54 is situated just beyond the exit end 52, and is supported by a cable 56 from a crane or other lifting device.

Steps 58 are provided to give access for the operator 36 from the ground surface 34 to the platform 42.

As shown in Figure 2, the support structure 40 rests as a static structure on the ground surface 34. It may be a permanent installation in a maintenance facility, so that, for example, an engine separated from an aircraft and supported on a stand may be manoeuvred to present the engine as shown in Figure 2, or it may be structure that can be assembled in front of an aircraft as required, and subsequently can be dismantled for storage. Alternatively, the support structure 40 may be a mobile structure to enable it to be manoeuvred into position in front of an engine requiring maintenance. For example, the structure may be provided with wheels.

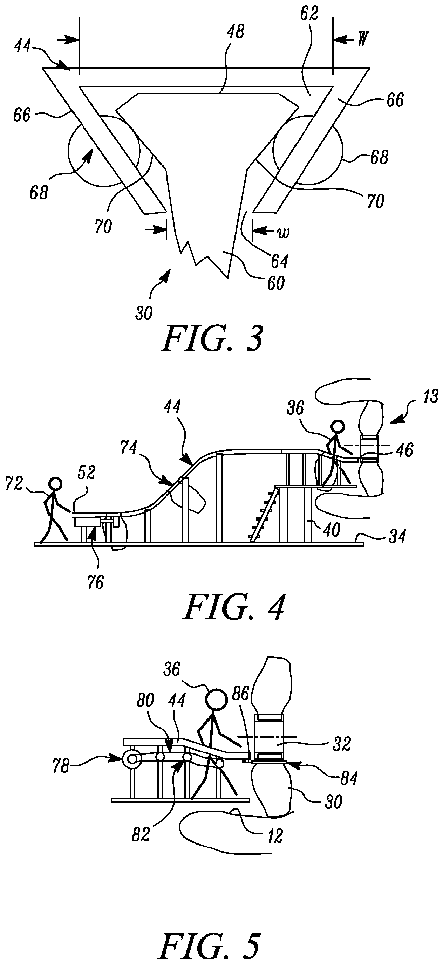

Figure 3 is a schematic cross-sectional view of the guide rail 44. The blade 30 comprises an aerofoil 60 which extends from the blade root 48. It will be appreciated from Figure 3 that the guide rail 44 defines a guide channel 62 which opens to the exterior at a blade projection slot 64. Both the guide channel 62 and the blade projection slot 64 extend longitudinally of the guide rail 44. The width *w* of the blade projection slot 64 is less than the maximum width *W* of the channel 62, both widths being measured transversely of the guide rail 44, i.e. in the plane of Figure 3. In the embodiment shown in Figure 3, the channel has a dovetail form, but other profiles are possible, depending on the configuration of the blade root 48. It will be appreciated that the profile of the channel 62, in conjunction with that of the blade root 48, means that the blade root 48, once introduced into the channel 62 at the receiving end 46 of the guide rail 44, will be retained in the channel 62 with the aerofoil 60 hanging downwardly through the blade projection slot 64.

Sidewalls 66 of the channel 62 are provided with a bearing arrangement in the form of spherical ball transfer units 68 on which inclined surfaces 70 of the blade root 48 are supported.

In use of the apparatus shown in Figures 2 and 3, the apparatus 38 is positioned at the front of the engine 10 so that the platform 42 and the receiving end 46 are disposed within the air intake 12. The receiving end 46 of the guide rail 44 is positioned close to the blade root 48 of the blade 30 which is at BDC. If only one blade of the fan 13 is to be removed, the fan 13 is rotated about the axis 11 to position that blade at BDC. After removal of the spinner 23, the operator 36 on the platform 42 removes any additional fixing or chocking devices from the disc 32 in order to free the respective blade 30 from the disc 32, enabling it to be withdrawn in the forwards direction (to the left, as seen in Figure 2), and manipulated from its recess in the disc 32 directly into the receiving end 46 of the guide rail 38, so that the blade root 48 enters the guide channel 62. The receiving end may be aligned with the disc recess so that the blade 30 can be slid straight from the disc recess into the receiving end 46 without any change of orientation. Alternatively, the receiving end may be inclined to the disc recess, in which case the blade 30 may need to be tilted slightly in the disc recess before the blade root 48 can enter the receiving end 46. The blade 30 is then moved manually by the operator 36 away from the disc 32, guided by the profile of the guide rail 44. The bearing arrangement in the form of the transfer units 68 is provided at intervals along the guide rail 44, so that the blade 30 is supported by the bearing arrangement over the full extent of the guide rail 44, ensuring that the blade 30 is transported easily without damage or wear to the surfaces 70 of the blade root 48. The sloping section 50 constrains the blade 32 to move along a predetermined path indicated by arrows A, and also tilts the blade 30 as indicated at position 30A so that it automatically clears the wall 25 of the air intake 12. In particular, the route of the guide rail 44 including the sloping section 50 steers the blade 30 along the surface of the air intake 12 and over the "hump" at the throat 12A. Also, the weight of the blade 30 is borne by the guide rail 44, so that no heavy lifting is required of the operator 36.

At the exit end 52 of the guide rail 44, at the blade position indicated at 30B, the blade root 48 is introduced into a guide channel in the blade carrier 54, this guide channel being similar in profile to the guide channel 62 in the guide rail 44. The blade 30 can then be carried, for example, to a further operator 72 standing on the ground surface 34. It will be appreciated that the further handling of the blade 30 can take a variety of forms, including storage on a wheeled carriage for delivery to a repair station, or placement in a blade container on a forklift truck or other transport equipment.

Following removal of each blade from the disc 32, the fan 13 can be rotated to bring another blade 30 to the BDC position for similar removal.

It will be appreciated that installation of a repaired or replacement blade 30 can be achieved by the reverse procedure, i.e. by elevating the blade at position 30B to be introduced into the exit end 52 of the guide rail 44, transferring the blade 30 along the guide rail 44 to the receiving end 46, and then sliding the blade 30 directly from the guide rail 44 into the disc recess 32 for subsequent fixing. Again, the route followed by the guide rail 44 will steer the blade 30 over the contour of the intake duct 12.

The apparatus shown in Figures 2 and 3 enables the large, heavy and awkwardly shaped blades to be safely handled at height by a single individual. The controlled guidance of the blade 30 by the guide rail 44 minimises the possibility of damage to the blade 30 or the intake 12, which, in certain embodiments, is a particular issue with engines having short intakes or intakes with high levels of annulus line curvature close to the fan face. The apparatus avoids the need for the operator to stand on, or otherwise contact, the intake 12.

With appropriate design of the guide rail 44, any modification of the intake, for example by the provision of removable panels, in order to allow passage of the blade 30 is avoided. Consequently, the design of the intake 12 or elsewhere on the fan case assembly is not compromised by the provision of features that aid blade removal but reduce aero and acoustic performance.

Because the apparatus enables blade removal and replacement while the engine is on the wing of the aircraft, and because removal of the intake 12 is unnecessary, downtime of the aircraft and consequent disruption to airline schedules is minimised, so improving engine life-cycle costs.

Figure 2 shows the guide rail 44 rising over the inclined portion 50 to the elevated exit point 52. In an alternative embodiment, as shown in Figure 4, the guide rail 44 subsequently slopes downwardly at a section 74 to a position close to the ground surface 34, so that the second operator 72 can transfer removed blades easily to a mobile carriage or other transport device for onward movement. The profile of the guide rail 44 can be configured or configurable to allow for different heights, curvatures and movement directions to suit different engines and workspaces. The downward sloping section 74 may be an additional structure that can be fitted to the guide rail 44 as shown in Figure 2, or the guide rail 44 may be purpose built as a continuous rail extending from the receiving end 46 to the exit end 52.

The blades 30 may be moved along the guide rail 44 by a combination of manual handling by the operator and gravity over the downwardly sloping section 74. The guide rail 44 may be provided with retardation devices or other braking provision such as friction linings, braked rollers or spherical ball bearings. This avoids uncontrolled acceleration of the blades 30 down the inclined section 74. In addition, retardation devices in the form of buffers 76 may be provided at the exit end 52 of the guide rail 44.

In the embodiment shown in Figures 2 to 4, the blades are conveyed along the guide rail 44 either manually by the operator 36 or under gravity down the sloping portion 74. In certain embodiments, it may be desirable to convey the blades along the guide rail 44 under power, as shown in Figure 5, in order to minimise manual handling of the blades 30. Thus, the apparatus may be equipped with a motor, such as an electric motor 78, which drives a conveyor 80 which may be a chain, cable or belt conveyor, running over guide wheels or sprockets 82. Alternatively, the motor 78 may drive a rack and pinion mechanism or may directly drive rolling elements of the bearing arrangement 68. A blade attachment, for example in the form of a collar 84, may be provided for attachment to each blade to be removed. The collar 84 is provided with a hook 86 which is engageable with the conveyor 80 so that the blade 30 can be hauled along the guide rail 44. Guide wheels may be provided at regular points along the guide rail 44 in order to ensure the correct tension and direction of pull of the conveyor 80. A ratchet and pawl mechanism or other form of braking mechanism may be provided on the guide rail 44, particularly at sloping portions of the guide rail 44, in order to prevent uncontrolled travel of the blade 30 in the event of drive failure.

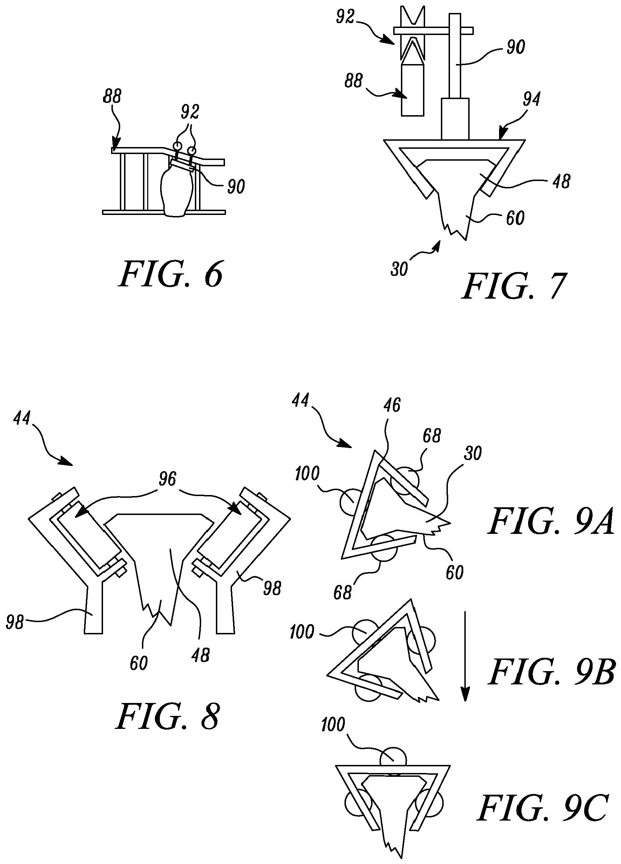

Figures 6 and 7 show an alternative embodiment in which the guide rail 44 itself is not profiled in order to accommodate the blade root 48. Instead, a possibly conventional, off-the-shelf guide rail 88 may be provided on which a runner 90 is supported by means of wheels 92. The runner 90 is equipped with a blade holder 94 having a profile similar to that of the guide rail 44 shown in Figure 3 for accommodating the blade root 48. In this instance, bearing means such as the spherical balls 68 may not be required, since, after introduction into the blade carrier 94, relative movement between the blade root and the blade carried 94 does not occur.

Figure 8 shows an alternative embodiment in which the elongate guide constituted by the rail 44 of Figure 3 is replaced by an elongate guide 44 in the form of a pair of angled runs of rollers 96 supported by separate roller carriers 98. As with previous embodiments, braking mechanisms for the rollers 96 may be provided, particularly on sloping sections of the elongate guide 44.

As described in the preceding embodiments, the apparatus is used to withdraw a blade 30 at the BDC position of the fan 13. Withdrawal of blades in different positions, including top dead centre, around the fan 13 can be achieved by orienting the receiving end 46 of the guide rail 44 appropriately for the position of the blade to be withdrawn. For example, as shown in Figure 9A, the blade 30 may be withdrawn from a position at which it is almost horizontal by an appropriately inclined orientation of the receiving end 46 of the guide rail 44. The guide rail 44 may then be twisted so that, as the blade 30 travels along the guide rail 44, it progressively reaches the downwardly suspended position shown in Figure 9C, via the position shown in Figure 9B. In certain embodiments, the vertical position shown in Figure 9C may be preferred, since it provides a stable orientation. Additional blade support or propping may be required to ensure the blade is not damaged owing to the aerofoil 60 exerting a moment at the root 48. Alternatively, or in addition, further rollers 100 may be provided to engage the bottom surface of the blade root 48 to prevent heeling of the root 48.

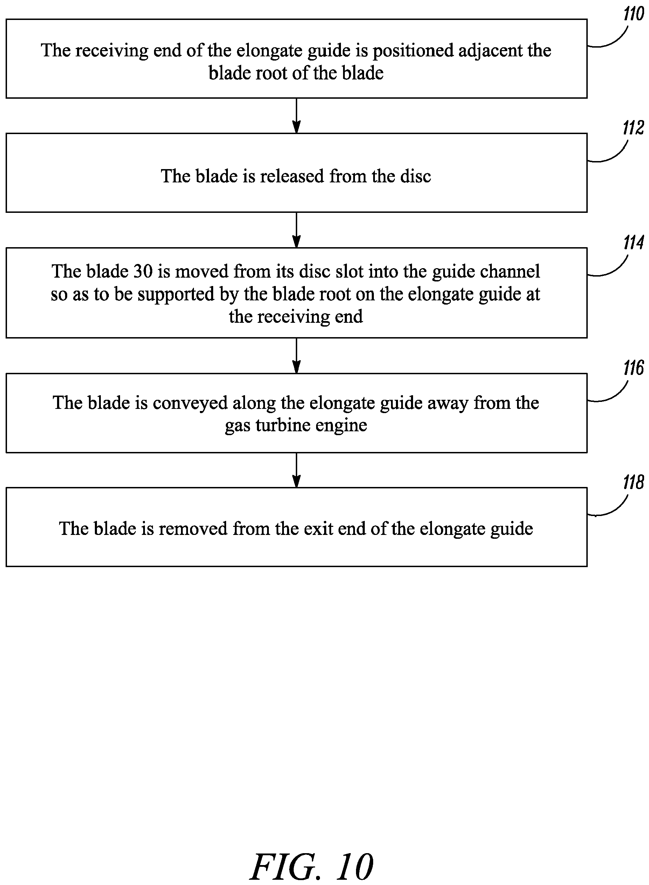

Figure 10 is a schematic flow diagram of the blade removal process. At step 110, the receiving end 46 of the elongate guide 44 is positioned adjacent the blade root 48 of the blade 30. At step112, the blade 30 is released from the disc 32, and at step 114 the blade 30 is moved from its disc slot into the guide channel 62 so as to be supported by the blade root 48 on the elongate guide 44 at the receiving end 46. At step 116 the blade is conveyed along the elongate guide 44 away from the gas turbine engine 10. At step 118 the blade 30 is removed from the exit end of the elongate guide 44 for further treatment such as repair.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method of withdrawing a blade (30) from a gas turbine engine (10), the method comprising:
i. positioning a receiving end (46) of an elongate guide (44) adjacent a blade root (48) of the blade (30);
ii. releasing the blade (30) from the gas turbine engine (10);
iii. supporting the blade (30) by the blade root (48) on the elongate guide (44) at the receiving end (46); and
iv. conveying the blade (30) along the elongate guide (44) away from the gas turbine engine (10).

2. A method as claimed in claim 1, in which the gas turbine engine (10) is mounted on a wing of an aircraft.

3. A method as claimed in any one of the preceding claims, in which the receiving end (46) of the elongate guide (44) is positioned within an intake duct (12) of the gas turbine engine (10).

4. A method as claimed in any one of the preceding claims, in which the blade (30) is conveyed along the elongate guide (44) at least partly under gravity and/or at least partly under power.

5. A method as claimed in any one of the preceding claims, , in which the blade (30) is conveyed along the elongate guide (44) from a first level corresponding to the blade (30) position in the engine (10) to a second level which is lower than the first level, and optionally in which the blade (30) is removed from the elongate guide (44) at an exit point (52) at the end of the guide opposite the receiving end (46).

6. Apparatus for use in performing a method in accordance with any one of the preceding claims, the apparatus comprising:
i. a support structure for supporting the apparatus on a ground surface (40);
ii. the elongate guide (44) supported on the support structure (40) and having the receiving end (46) for receiving the blade root (48) of a blade (30); and
iii. an elevated operator platform (42) for supporting an operator (36) when releasing the blade (30) from the gas turbine engine (10) and transferring the blade (30) to the elongate guide (44) at the receiving end (46).

7. Apparatus as claimed in claim 6, in which the elongate guide (44) and the platform (42) are cantilevered from the support structure (40) whereby the receiving end (46) and at least part of the platform (42) are positionable within an intake duct (12) of a gas turbine engine (10).

8. Apparatus as claimed in any one of claims 6 and 7, in which the elongate guide (44) has an internal guide channel (62) for receiving the blade root (48) and a longitudinally extending blade projection slot (64) extending from the guide channel (62) to the exterior of the elongate guide (44), the blade projection slot (64) having a width (*w*) less than the maximum transverse width (*W*) of the guide channel (62), and optionally the guide channel (62) is provided with a bearing arrangement (68) adjacent to the blade projection slot (64).

9. Apparatus as claimed in any one of claims 6 to 8, in which at least a portion of the elongate guide (44) is twisted about its longitudinal axis, whereby orientation of the blade (30) about the longitudinal axis of the elongate guide (44) changes during travel of the blade (30) along the elongate guide (44).

10. Apparatus as claimed in any one of claims 6 to 9, in which a carrier (54) is provided at an exit end (52) of the elongate guide (44) which carrier (54) is positionable for receiving a blade (30) from the elongate guide (44).

11. Apparatus as claimed in claim 6, in which a runner (90) is mounted for travel along the elongate guide (44), the runner (90) carrying a blade holder (94) configured to receive the blade (30) from the gas turbine engine (10) at the receiving end (46) of the elongate guide (44).

12. Apparatus as claimed in any one of claims 6 to 11, in which drive means (78) is provided for conveying the blade (30) along the elongate guide (44), and optionally in which a blade attachment (84) is provided which is configured for connection to the blade (30) and is engageable with the drive means (78).

13. Apparatus as claimed in any one of claims 6 to 12, in which at least a section (50) of the elongate guide (44) is inclined with respect to another section of the elongate guide (44), and optionally in which the elongate guide (44) terminates at the end away from the receiving end (46) at a position close to the ground surface (40).

14. Apparatus as claimed in claim 13, in which a retardation device (76) is provided for retarding blade travel on the downward sloping portion of the elongate guide (44).

15. Apparatus as claimed in any one of claims 6 to 14, in conjunction with an elevated gas turbine engine (10), the receiving end (46) of the elongate guide (44) being positioned adjacent a blade of the engine (10).

16. Apparatus as claimed in any one of claims 6 to 15, in which the elongate guide (44) is so shaped to maintain a minimum distance from an inner wall (25) of an intake duct (12) of a gas turbine engine (10) that allows the blade (30) situated within the intake duct (12) not to interfere with the intake duct (12) during withdrawing, and optionally in which a portion of the elongate guide (44) which is situated within the intake duct (12) is spaced from the inner wall (25) by at least the spanwise dimension of an aerofoil portion (60) of the blade (30).
